# EUROPÄISCHE PATENTSCHRIFT

(11) **EP 4 254 853 B1**
(45) Veröffentlichungstag und Bekanntmachung des Hinweises auf die Patenterteilung: **25.09.2024**
(21) Anmeldenummer: 22166189.5
(22) Anmeldetag: 31.03.2022
(51) Int. Cl.: H04L 9/08

(54) **ENDE-ZU-ENDE VERSCHLÜSSELTE DATENÜBERTRAGUNG UND ABSICHERUNG DER LETZTEN MEILE**
END-TO-END ENCRYPTED DATA TRANSMISSION AND PROTECTION OF THE LAST MILE
TRANSMISSION DE DONNÉES CHIFFRÉES DE BOUT EN BOUT ET SÉCURISATION DU DERNIER KILOMÈTRE

(43) Veröffentlichungstag der Anmeldung: 04.10.2023
(73) Patentinhaber: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Nern, Peter-Michael

(56) Entgegenhaltungen:
- WO-A1-2021/090027
- CN-A- 107 453 869
- DE-B4- 102020 109 246
- HUANG LEILEI ET AL: "A practical hybrid quantum-safe cryptographic scheme between data centers", SPIE PROCEEDINGS; [PROCEEDINGS OF SPIE ISSN 0277-786X], SPIE, US, vol. 11540, 20 September 2020 (2020-09-20), pages 1154008 - 1154008, XP060134282, ISBN: 978-1-5106-3673-6, DOI: 10.1117/12.2573558

## Beschreibung

Die Erfindung betrifft eine Lösung für die Ende-zu-Ende verschlüsselte Datenübertragung. Gemäß einem Aspekt bezieht sich diese Lösung dabei insbesondere auf die Absicherung der letzten Meile einer solchen über ein Weitverkehrsnetz erfolgenden Datenübertragung. Gegenstände der Erfindung sind dabei ein entsprechendes Verfahren und ein zur Durchführung dieses Verfahrens geeignetes System für eine Ende-zu-Ende verschlüsselte Datenübertragung.

Der Absicherung der Infrastruktur von zur Datenübertragung genutzten Kommunikationsnetzen sowie der Sicherung der über diese Netze ausgetauschten Daten kommt eine nach wie vor steigende Bedeutung zu. Wesentliches Element dieser Absicherung sind Verschlüsselungstechniken sowohl zur Verschlüsselung von Steuer- und Protokolldaten für die Übertragung entsprechender Kommunikationsdaten sowie der letztgenannten Nutzdaten selbst. Die zu diesem Zweck beispielsweise von den Betreibern von Weitverkehrsnetzen eingesetzten Verschlüsselungsverfahren gelten derzeit und für die unmittelbare Zukunft noch als sehr sicher.

Im Hinblick auf die sich im Zusammenhang mit der Entwicklung von Quantencomputern abzeichnenden Fortschritte kann sich dies jedoch möglicherweise sehr rasch ändern. Daher gilt es bereits jetzt, die Kommunikationsnetze auch gegenüber eventuellen Angriffen mittels Quantencomputern sicher zu machen. Dies gilt, zumal entsprechende, für die elektronische Kommunikation aufgebaute Infrastrukturen und industrielle Erzeugnisse, welche auf eine Datenkommunikation angewiesen sind, nicht selten für längere Zeiträume im Einsatz sind, in denen sich die Entwicklung von Quantencomputern und ihre Verfügbarkeit möglicherweise noch deutlich beschleunigen könnten.

Die Kommunikationsunternehmen und ihre Ausrüster entwickeln daher schon seit längerem Lösungen, mit welchen den sich insoweit abzeichnenden Gefahren entgegengewirkt werden kann, das heißt, welche insbesondere mit Quantencomputern ausgeführten Angriffen widerstehen können. Derartige Lösungen bedienen sich hierfür teilweise selbst quantenmechanischer Techniken. Sie sind zumeist darauf angelegt, insbesondere die Kernnetze öffentlicher Kommunikationsnetze unter Einsatz entsprechender Techniken abzusichern.

Allerdings ist der Einsatz quantenmechanischer Lösungen zur Absicherung der Datenübertragung in Kommunikationsnetzen auch mit Nachteilen verbunden. Ein wesentlicher Nachteil besteht darin, dass derartige Technologien sehr aufwendig und teuer sind. Ergänzend sei noch erwähnt, dass der Einsatz quantenmechanischer Lösungen, wie beispielsweise der Einsatz von Verfahren für die Quantum Key Distribution (QKD), jedenfalls soweit hierfür optische Übertragungsstrecken, wie Glasfaserkabel, genutzt werden, hinsichtlich ihrer Reichweite prinzipbedingt auf einige Hundert Kilometer limitiert sind.

Aus den vorgenannten Gründen ist nicht davon auszugehen, dass in absehbarer Zeit auch Endgeräte oder andere telekommunikative Endeinrichtungen in nennenswertem Umfang mit entsprechenden quantenmechanischen Ressourcen ausgestattet werden. Jedoch gibt es Überlegungen und Planungen dafür, zumindest Außenknoten von entsprechend gesicherten Weitverkehrsnetzen mit quantenmechanischen, respektiven quantenoptischen Mitteln auszustatten. Eine gegenüber einem Angriff mit Quantencomputern sichere Ende-zu-Ende-Übertragung muss jedoch auch eine entsprechende Absicherung der letzten Meile, also der Übertragungsstrecke zwischen einem mit quantenoptischen Mitteln ausgestatteten Außenknoten eines entsprechend gesicherten Weitverkehrsnetzes und den über diesen Außenknoten Zugang zum Weitverkehrsnetz erhaltenden Endeinrichtungen, wie Endgeräten oder Integrated Access Devices IAD, über welche Endgeräte eines lokalen Netzwerks LAN Zugriff auf einen solchen Zugangsknoten erhalten, entsprechend abgesichert werden.

Die internationale Patentanmeldung WO 2021/090027 A1 offenbart die Verbindung einer Sicherheitsebene mittels eines QKD-Netzwerks mit einer Datenverteilungsebene zur Sicherung und Verteilung von Daten mittels eines Repository- oder Speichersystems basierend auf verteilter Ledger-Technologie, Cloud-Technologie und/oder zentralisierter Speichertechnologie, um quantensichere Dienstleistungen anzubieten.

Die chinesische Patentanmeldung CN 107453869 A offenbart ein System, bei dem eine IPSec-Verbindung zwischen zwei Terminals durch einen VPN-Tunnel gesichert wird. Dieser VPN-Tunnel wird zusätzlich mit einem Schlüssel aus einer QKD-Verbindung gesichert.

Das deutsche Patent DE 10 2020 109246 B4 offenbart ein System, worin zwei unterschiedliche Zufallszahlen aus dem QKD-Verbund auf disjunkten Wegen über VPN-Verbindungen an eine Endgeräteeinrichtung übertragen werden. Diese Zufallszahlen werden durch XOR verbunden und zur Schlüsselableitung verwendet.

Leilei Huang, Kai Feng, and Chongjin Xie "A practical hybrid quantum-safe cryptographic scheme between data centers" (Proc. SPIE 11540, Emerging Imaging and Sensing Technologies for Security and Defence V; and Advanced Manufacturing Technologies for Micro- and Nanosystems in Security and Defence III, 1154008, 20 September 2020) offenbart eine IP-sec Verbindung, die als VPN mit einer QKD Verbindung abgesichert wird. Die Druckschrift erwähnt auch postquantum cryptography (PQC) und PQC-Zertifikate.

Aufgabe der Erfindung ist es, eine Lösung für die quantensichere Ende-zu-Ende verschlüsselte Datenübertragung bereitzustellen, welche insbesondere auch eine entsprechende Absicherung der letzten Meile umfasst. Hierzu sind ein Verfahren anzugeben und ein zur Durchführung dieses Verfahrens geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes System wird durch den unabhängigen Sachanspruch charakterisiert. Vorteilhafte Aus- und Weiterbildungen der Erfindung sind durch die jeweiligen Unteransprüche gegeben.

Das zur Lösung der Aufgabe vorgeschlagene Verfahren für eine quantensichere, Ende-zu-Ende verschlüsselte Datenübertragung geht vom Vorhandensein eines mittels dazu ausgebildeter Netzwerkeinrichtung quantenmechanisch gesicherten Weitverkehrsnetzes aus, im Weiteren sprachlich vereinfachend als QMS-WAN (Quantum Mechanical Secured Wide Area Network) bezeichnet. Bei den vorgenannten Netzwerkeinrichtungen, mittels welcher das Weitverkehrsnetz (WAN) durch quantensichere Verschlüsselung gesichert wird, kann es sich insbesondere um mit quantenmechanischen Mitteln ausgestattete Netzwerkknoten handeln, welche beispielsweise dazu ausgebildet sind, der Absicherung von Netzwerkkanälen dienende quantensichere Schlüssel nach einem Verfahren der Quantum Key Distribution zu erzeugen und innerhalb des WAN untereinander auszutauschen.

Auch können derartige Netzwerkeinrichtungen des Kernnetzes mit einem Quantencomputer oder mit einem Quantum Random Number Generator (QRNG) ausgestattet sein. Die vorgestellte Lösung geht weiterhin davon aus, dass das vorgenannte QMS-WAN mindestens einen, typischerweise mehrere Außenknoten aufweist, welche für teilnehmerseitige Endeinrichtungen Zugangsknoten zu dem QMS-WAN ausbilden, über welche also teilnehmerseitige Endeinrichtungen, wie IADs, Home Gateways oder einzelne Endgeräte, einschließlich Mobilfunkgeräte und IoT-Geräte (Geräte für das Internet of Things), Zugang zu dem QMS-WAN erhalten. Ein solcher Zugangsknoten verfügt als Teil des QMS-WAN ebenfalls über quantenmechanische Mittel. Die teilnehmerseitigen Endeinrichtungen hingegen verfügen typischerweise nicht über entsprechende quantenmechanische Mittel. Dennoch wird nach dem vorgeschlagenen Verfahren für die Ende-zu-Ende verschlüsselte Datenübertragung sichergestellt, dass die Daten auch auf der letzten Meile, nämlich zwischen einem in der zuvor erläuterten Weise beschaffenen Außenknoten des QMS-WAN (Zugangsknoten) und den über ihn Zugang zu dem QMS-WAN erhaltenden teilnehmerseitigen Endeinrichtungen, quantensicher übertragen werden.

Dies wird dadurch ermöglicht, dass die vorgenannten teilnehmerseitigen, sich zur Nutzung des Verfahrens bei dem Zugangsknoten zum QMS-WAN anmeldenden Endeinrichtungen durch den Zugangsknoten (Außenknoten des QMS-WAN) zu einem Virtual Private Network (VPN) zusammengeführt werden. Die Endeinrichtungen authentifizieren sich dabei zur Anmeldung bei dem nicht nur als Zugangsknoten zum QMS-WAN, sondern auch als VPN Gateway fungierenden Außenknoten des QMS-WAN mithilfe ihnen durch den Betreiber des als VPN Gateway fungierenden Zugangsknoten zugeteilter Credentials. Bei diesen Credentials handelt es sich beispielsweise um einen einer jeweiligen Endeinrichtung als Client zugeteilten Private Key, ein Zertifikat (Client Certificate) und/oder Daten zu einer ein entsprechendes Zertifikat ausstellenden vertrauenswürdigen Instanz (Trust Agency Certificate).

Je nach Implementierung des Verfahrens, das heißt in Abhängigkeit von dem genutzten VPN-Protokoll, kann es vorgesehen sein, dass die teilnehmerseitigen Endeinrichtungen von dem als VPN Gateway fungierenden Zugangsknoten nach erfolgreicher Authentifizierung eine sie in dem VPN adressierende IP-Adresse beziehen (beispielsweise TAP/TUN VPNs). Jedoch kann auch ein VPN-Protokoll, wie zum Beispiel IPSec oder Strong Swan, zum Einsatz kommen, bei welchem dies nicht geschieht.

Gemäß dem zur Lösung der Aufgabe vorgeschlagenen Verfahren wird das von dem als VPN Gateway fungierenden Zugangsknoten aufgespannte VPN als ein PQ-VPN, nämlich als ein durch Post Quantum Cryptography (PQC) gesichertes VPN, betrieben. Dies wird dadurch gewährleistet, dass eine zwischen dem als VPN Gateway fungierenden Zugangsknoten zum QMS-WAN und einer jeweiligen bei diesem angemeldeten teilnehmerseitigen Endeinrichtung aufgebaute VPN-Verbindung unter Nutzung der von der teilnehmerseitigen Endeinrichtung zur Anmeldung verwendeten Credentials und eines von dem VPN Gateway zur Authentifizierung gegenüber sich bei ihm anmeldenden teilnehmerseitigen Endeinrichtungen verwendeten PQC-Zertifikats nach einem Verfahren der Post Quantum Cryptography PQC verschlüsselt wird. Ein Überblick über PQC-Zertifikate nutzende Verfahren zur Authentifizierung, respektive PQC-Signierverfahren, wird am Ende dieser Beschreibung gegeben.

Bei Post Quantum Cryptography Verfahren handelt es sich um Verschlüsselungsverfahren, für welche keine quantenmechanischen Mittel erforderlich sind, mittels derer aber dennoch eine Verschlüsselung möglich ist, die aufgrund der Verwendung komplexer mathematischer Verfahren nach derzeitigem Stand, in Ermangelung eines gegenteiligen Beweises, als quantensicher angesehen werden, bei denen also davon ausgegangen wird, dass die mittels ihrer realisierte Verschlüsselung einem Angriff mit Quantencomputern widerstehen kann. Entsprechende Verfahren befinden sich derzeit in der intensiven Überprüfung im Rahmen von Zertifizierungsverfahren für ihre Zulassung. Insoweit kann im Rahmen einer nach dem vorgestellten Verfahren erfolgenden Ende-zu-Ende verschlüsselten Übertragung von Daten davon gesprochen werden, dass dabei die Daten nicht nur bei ihrer Übertragung über das WAN, nämlich über das QMS-WAN, aufgrund der entsprechenden hardwaremäßigen Ausgestaltung des Weitverkehrsnetzes, sondern auch auf der letzten Meile quantensicher übertragen werden. PQC-Verfahren selbst, welche insbesondere auch das Prinzip des KEM (Key Encapsulation Mechanism) nutzen, sind dabei nicht Gegenstand der Erfindung.

Das erfindungsgemäße Verfahren ist vorzugweise so ausgestaltet, dass sich teilnehmerseitige Endeinrichtungen zur Nutzung des Verfahrens im Zuge ihrer Anmeldung bei einem entsprechenden, als VPN Gateway fungierenden Zugangsknoten zum QMS-WAN nach dem Prinzip der Zweifaktor-Authentifikation (2FA) authentifizieren. Der Zugangsknoten seinerseits authentifiziert sich gegenüber den sich bei ihm anmeldenden teilnehmerseitigen Endeinrichtungen mittels des schon genannten PQC-Zertifikats. Durch Letzteres wird auch gewährleistet, dass seitens der Endeinrichtungen Sicherheit darüber besteht, dass es sich bei dem Zugangsknoten, bei welchem sie sich angemeldet haben, tatsächlich um einen die Nutzung des Verfahrens ermöglichenden Zugangsknoten handelt, also um eine hierzu autorisierte Netzwerkeinrichtung des QMS-WAN, durch deren Nutzung auch die Datenübertragung auf der letzten Meile quantensicher ist.

An dieser Stelle soll für einige der bereits vorstehend oder nachfolgend in den beschreibenden Ausführungen gebrauchten Kategorien das ihnen in diesem Kontext zugrundeliegende Verständnisses erläutert werden.

QMS-WAN: Ein QMS-WAN ist ein Quantum Mechanical Secured Wide Area Network, also ein quantenmechanisch gesichertes Weitverkehrsnetz. Es handelt sich mithin um ein Weitverkehrsnetz (WAN), dessen Netzwerkeinrichtungen/Netzwerkknoten über quantenmechanische Mittel verfügen.

Zugangsknoten: Zugangsknoten sind Endpunkte einer quantenoptischen QKD Schlüsselaustauschplattform, respektive eines QMS-WAN. Sie bestehen im Wesentlichen aus einem Schlüsselmanagement, einem lokalen Schlüsselspeicher (Key Store) und QKD / PQC Systemen zum Schlüsselaustausch. Eventuell nutzen sie die Methode der Zufallszahlenverteilung mit lokaler Berechnung von Applikationsschlüsseln (ED, Entropy Distribution) über ein "Pre-shared Secret" (PSS). Typischerweise befinden sich QKD Zugangsknoten in Gebäuden von Netzbetreibern (POP, Point of Presence), an die Teilnehmer angeschlossen sind, oder zum Beispiel auch in einem Gebäude einer Organisation, die zur Befriedigung eines bei ihr bestehenden erhöhten Sicherheitsbedürfnisses an die quantenoptische Sicherheitsplattform angebunden ist.

PQ-VPN: PQ-VPN bezeichnet ein Post Quantum Cryptography (PQC) Virtual Private Network (VPN), also ein durch Verfahren der PQC gesichertes VPN. Ein VPN mithilfe eines VPN Gateway (hier der als ein solches fungierende Zugangsknoten spannt ein virtuelles Netzwerk auf, welches gegebenenfalls IP-Adressen an Benutzer und deren Endgeräte zuteilt, so dass diese sicher in einem zugeteilten Adressraum kommunizieren können. Die Sicherheit eines PQ-VPN beruht nun nicht mehr auf den RSA (Kryptosystem nach Rivest, Shamir, Adleman) oder ECC (ECC = Elliptic Curve Cryptography) Verschlüsselungs- und Authentifizierungsverfahren, sondern es werden PQC Algorithmen eingesetzt, die auf schwierigerer, unterstelltermaßen selbst für Quantencomputer nicht angreifbarer Mathematik beruhen. PQC nutzende VPNs (PQ-VPNs) gelten daher als Verfahren, um quantensichere, private Kommunikation zu ermöglichen. PQ-VPNs werden derzeit entwickelt und sind teilweise als Open Source Projekt verfügbar.

QRNG/QC: Quanten-Zufallszahlen-Generatoren, respektive Quantum Random Number Generators (QRNG) liefern Zufallszahlen, die auf Basis von quantenmechanischen Effekten erzeugt wurden. Quantencomputer (QC) sind Rechner, die die Effekte der Quantenmechanik zur Berechnung von Problemen nutzen - insbesondere können Quantencomputer qualitativ hochwertige Zufallszahlen, das heißt Zufallszahlen hoher Entropie erzeugen. Im Rahmen der vorgestellten Lösung erzeugen die QRNG/QC Zufallszahlen und zugehörige Identifier und versenden diese an die Teilnehmer des Protokolls, nämlich insbesondere an teilnehmerseitige Endeinrichtungen. QRNG/QC sind bereits kommerziell verfügbar.

Geschäftsqebäude: Ein Geschäftsgebäude ist eine in sich abgeschlossene Einrichtung eines Netzbetreibers als so genannter Point of Presence (POP), ein Bürogebäude, ein Verwaltungsgebäude, eine Firmenzentrale oder eine Forschungseinrichtung mit Glasfaser oder Festnetz Kabelanschluss und vorzugsweise außerdem mit Anschluss an ein Mobilfunknetz.

Mobile Endgeräte: Mobile Endgeräte sind alle Netzwerkelemente ohne Festnetz- oder Faseranschluss zum Beispiel in Handys, Tablets (Tablet-PCs), Sensoren, Fahrzeugen, oder sonstigen Verkehrsmitteln (zum Beispiel im Rahmen von IOT). Mobile Endgeräte verfügen mindestens über einen Anschluss über Mobilfunk, Satellitenfunk, Richtfunk, WLAN, oder WiFi.

Smart Cards: Smart Cards sind Karten (üblicherweise aus Kunststoff) mit einem Computerchip, auf denen sich digitale Daten wie kryptographische Schlüssel oder Zertifikate speichern lassen. Mit einem Kartenlesegerät lassen sich die Daten der Smart Card zusammen mit einem Computer und anderen Endgeräten verwenden. Der Vorteil der Smart Cards liegt darin, dass die Zertifikate oder Schlüssel die Smart Card niemals verlassen. Auch werden sie sicher außerhalb der digitalen Geräte aufbewahrt.

Mobile Endgeräte lassen sich nicht leicht mit Smart Cards kombinieren. Hier lassen sich aber Ansätze mit einer embedded SIM (eSIM) realisieren, das heißt eine gesonderte Hardware in Smartphones oder Telemetrie-Diensten von Fahrzeugen, die kryptographische Artefakte wie Schlüssel oder Zertifikate sicher verwahren kann, Zudem lassen sich in beiden Fällen (Nutzung eines Endgeräts zusammen mit einer Smart Card oder mit SIM-Karte oder eSIM ausgestattetes mobiles Endgerät) Methoden wie die Zweifaktor-Authentifizierung (2FA) einsetzen, wie es zum Beispiel bei Cloud Applikationen heute schon üblich ist.

Schlüsselweiterleitung: Schlüsselweiterleitung ist der Prozess, eine Zufallszahl oder kryptographischen Schlüssel mithilfe einer dafür vorgesehenen Funktion (Key Forwarding Function) zum jeweils nächsten Netzwerkknoten/Netzelement weiterzuleiten, ohne das hierbei der eigentliche Schlüssel offenliegt. Hierzu wird der Schlüssel typischerweise mit einem anderen Schlüssel, respektive einer anderen Zufallszahl, welche(r) beim Absender und beim Empfänger vorliegt, bitweise XOR-verknüpft.

Key Derivation Funktion: Eine Key Derivation Funktion KDF ist eine Operationen, respektive Prozessierungsvorschrift zur Ableitung eines Schlüssels (finaler Schlüssel, Anwendungsschlüssel) aus einer Zufallszahl hoher Entropie, welche beispielsweise im Rahmen eines Prozesses der Quantum Key Distribution QKD oder mittels eines Zufallszahlengenerators (Quantum Random Number Generator - QRNG) erzeugt wurde und als Entropie verteilt wird (ED = Entropy Distribution). Durch Anwendung derselben KDF unter Einsatz eines gemeinsamen (gegebenenfalls vorverteilten, das heißt Pre-Shared) und somit desselben Geheimnisses (Secret) auf eine beidseits einer Übertragungsstrecke identisch vorliegende Zufallszahl hoher Entropie können über diese Übertragungsstrecke verbundene Teilnehmer/Einrichtungen gemeinsame, von ihnen zur Verschlüsselung ihrer Kommunikation dienende Anwendungsschlüssel ableiten, ohne diese Schlüssel selbst über die bestehende Verbindung austauschen zu müssen. Als KDF kann im einfachsten Falle eine bitweise XOR Verknüpfung genutzt werden. Zur Erhöhung der Sicherheit wird hierfür vorzugsweise jedoch nicht eine bitweise XOR-Operation, sondern eine durch das NIST (National Institute of Standards and Technology) standardisierte KDF verwendet.

In weiterer Ausgestaltung des Verfahrens ist es vorgesehen, dass ein als VPN Gateway fungierender Zugangsknoten zum QMS-WAN an mindestens eine bei ihm angemeldete teilnehmerseitige Endeinrichtung über die zu dieser aufgebaute, mittels PQC verschlüsselte VPN-Verbindung Zufallszahlen hoher Entropie übermittelt. Entsprechende Zufallszahlen hoher Entropie werden hierbei durch den Zugangsknoten, respektive durch das mit quantenmechanischen Mitteln ausgestattete VPN Gateway zusammen mit jeweils eine der betreffenden Zufallszahlen eindeutig identifizierenden Identifikatoren (Identifier) übermittelt.

Aus den Zufallszahlen hoher Entropie erzeugen der diese Zufallszahlen zur Verfügung stellende Zugangsknoten zum QMS-WAN und die mindestens eine diese Zufallszahlen von ihm empfangende teilnehmerseitige Endeinrichtung unter Verwendung eines sowohl bei dem Zugangsknoten (VPN Gateway) als auch bei der betreffenden Endeinrichtung vorliegenden gemeinsamen Pre-shared Secret durch Anwendung einer Key Derivation Function KDF, nämlich derselben Prozessierungsvorschrift identische quantensichere Anwendungsschlüssel. Soweit gemäß den vorstehenden Ausführungen mindestens eine teilnehmerseitige Endeinrichtung zusammen mit dem Zugangsknoten identische Anwendungswendungsschlüssel erzeugt, bezieht sich diese Aussage auf mehrere denkbare Konstellationen und Möglichkeiten der Verfahrensgestaltung.

Zunächst ist es so, dass allein aus praktischer Sicht betrachtet, die Erzeugung entsprechender Anwendungsschlüssel vorzugsweise nicht zum Zweck eines Austausches verschlüsselter Nutzdaten, respektive Anwendungsdaten, zwischen einer teilnehmerseitigen Endeinrichtung und dem Zugangsknoten erfolgen wird, sondern zum Zweck des verschlüsselten Datenaustausches zwischen Endeinrichtungen. Das später noch näher zu betrachtende System umfasst zudem nicht nur eine, sondern mehrere Endeinrichtungen, zwischen denen Daten Ende-zu-Ende übertragen, respektive ausgetauscht werden. Dies ergibt sich im Übrigen auch aus dem Verfahren, wie beansprucht und vorstehend beschrieben, wonach durch den sowohl als Zugangsknoten zu dem QMS-WAN als auch als VPN Gateway fungierenden Außenknoten des QMS-WAN sich bei ihm anmeldende Endeinrichtungen zu einem VPN zusammengeführt werden.

Das heißt, dass ein, respektive der als VPN Gateway fungierende Zugangsknoten zum QMS-WAN im Zusammenwirken mit mehreren teilnehmerseitigen Endeinrichtungen jeweils identische quantensichere Anwendungsschlüssel erzeugen wird, wobei es bezüglich jedes dieser Anwendungsschlüssel zumindest eine Endeinrichtung gibt die über dasselbe Pre-shared Secret wie der Zugangsknoten und somit über einen, aufgrund der Verwendung dieses Pre-shared Secret in einer KDF, identischen Anwendungsschlüssel verfügt.

Darüber hinaus ist es aber auch möglich, dass mehrere teilnehmerseitige, zu einer Gruppe gehörende Endeinrichtungen gemeinsam mit dem Zugangsknoten über dasselbe Pre-shared verfügen und demzufolge gemeinsam mit dem Zugangsknoten identische, danach bei allen Endeinrichtung dieser Gruppe zur Verwendung vorliegende Anwendungsschlüssel erzeugen. Die bei dem Zugangsknoten und bei der jeweiligen teilnehmerseitigen Endeinrichtung in der zuvor beschriebenen Weise erzeugten Anwendungsschlüssel werden in hierbei einbezogen Einrichtungen, also in dem Zugangsknoten und in der oder den jeweiligen teilnehmerseitigen Endeinrichtung(en), unter Zuordnung zu dem sie jeweils bezeichnenden Identifier (Identifikator) zur späteren Verwendung in einem sicheren Speicher abgelegt.

Entsprechend einer praxisgerechten Implementierung des Verfahrens können die gemeinsam mit dem Zugangsknoten zum QMS-WAN erzeugten Anwendungsschlüssel seitens einer Endeinrichtung auf einer mit dieser auch zur Anmeldung bei dem Zugangsknoten zu verwendenden Smart Card oder, sofern es sich bei der Endeinrichtung um ein mobiles Endgerät oder um ein sonstiges Endgerät für die Mobilfunknutzung handelt, auf einer SIM-Karte (mit SIM = Subscriber Identity Module) oder in einer eSIM (embedded SIM) gespeichert werden. Im Hinblick auf die Verwendung zur Anmeldung bei dem Zugangsknoten sind in diesem Fall auf einer entsprechenden Smart Card oder SIM, respektive in der eSIM, auch die Verbindungsdaten zum Zugangsknoten für das QMS-WAN und damit die Verbindungsdaten für das durch diesen aufgespannte VPN sowie Credentials für die Authentifizierung der jeweiligen teilnehmerseitigen Endeinrichtung gegenüber dem Zugangsknoten hinterlegt. Diese Daten können im Zuge eines Provisionierungsprozesses auf der Smart Card oder SIM (SIM-Karte oder eSIM) hinterlegt werden. Gleiches gilt für das oder die vorzugsweise ebenfalls hier abgelegte(n) Pre-shared Secret(s).

Eine zuvor bereits angesprochene Möglichkeit der Verwendung der unter Einsatz eines gemeinsamen Geheimnisses (Pre-shared Secret) mittels einer KDF bei dem als VPN Gateway fungierenden Zugangsknoten und mindestens einer teilnehmerseitigen Endeinrichtung in derselben Weise erzeugten identischen Anwendungsschlüssel ist die auf der Anwendungsebene erfolgende Verschlüsselung von zwischen zwei teilnehmerseitigen Endeinrichtungen ausgetauschten Daten (Anwendungsdaten). Zu diesem Zweck überträgt eine erste der beiden Endeinrichtungen den Identifikator eines von ihr hierfür ausgewählten quantensicheren Anwendungsschlüssels an die andere, das heißt an die zweite Endeinrichtung, wobei die Übertragung des Identifikators ohne Risiko über einen klassischen Kanal erfolgen kann. Die diesen Identifikator empfangende zweite Endeinrichtung prüft, ob der durch den Identifikator bezeichnete quantensichere Anwendungsschlüssel bei ihr, das heißt in einem entsprechend gesicherten Speicher dieser Endeinrichtung, vorliegt. Ist dies der Fall, teilt sie dies der ersten Endeinrichtung mit und entnimmt den betreffenden Schlüssel aus ihrem Speicher. Beide Endeinrichtungen können dann diesen Schlüssel unmittelbar als Sitzungsschlüssel zur verschlüsselten Übertragung untereinander auszutauschender Daten verwenden. Eine entsprechende Situation kann gegeben sein, wenn beide Endeinrichtungen einer gemeinsamen Gruppe angehören und ebenso wie der Zugangsknoten über dasselbe Pre-shared Secret verfügen.

Anderenfalls - der mit dem Identifikator bezeichnete Anwendungsschlüssel liegt bei der zweiten Endeinrichtung nicht vor - wird durch die zweite Endeinrichtung eine Nachricht an die erste Endeinrichtung übermittelt, welche die erste Endeinrichtung darüber informiert, dass der Anwendungsschlüssel bei der zweiten Endeinrichtung nicht vorliegt. In diesem Fall wird der ausgewählte quantensichere Anwendungsschlüssel selbst von der ersten Endeinrichtung über das PQ-VPN und damit über den als VPN Gateway fungierenden Zugangsknoten an die zweite Endeinrichtung übertragen. Dies geschieht mithilfe eines in einem zur Durchführung des Verfahrens ausgebildeten System implementierten Schlüsselweiterleitungsprotokolls (Key Forwarding Function).

Gemäß diesem Weiterleitungsprotokoll wird der Schlüssel auf dem zumindest die sendende Endeinrichtung, den Zugangsknoten und die empfangende Endeinrichtung als Übertragungsstationen umfassenden Übertragungspfad in dem PQ-VPN vorzugsweise in der Weise übertragen, dass er von der ihn jeweils aussendenden Übertragungsstation unter Verwendung eines bei dieser und bei der den Schlüssel empfangenden Übertragungsstation vorliegenden Pre-shared Secret bitweise XOR-Bildung verknüpft und das dabei entstehende Ergebnis ausgesendet wird. Bei dem letztgenannten Pre-Shared Secret kann es auch um ein anderes Pre-Shared Secret handeln als um das zur Erzeugung der quantensicheren Anwendungsschlüssel verwendete, wobei dies sogar ein "Muss" ist, wenn die Erzeugung der Anwendungsschlüssel ausnahmsweise unter Verwendung der bitweisen XOR-Verknüpfung als KDF erfolgt. Aus der bitweise XOR-verknüpften Bitsequenz gewinnt dann die dieses Verknüpfungsergebnis empfangende Übertragungsstation durch erneute bitweise XOR-Verknüpfung mit dem Pre-Shared Secret wieder den Anwendungsschlüssel, welcher in dieser Weise gegebenenfalls über eine Mehrzahl von Übertragungsstationen bei der letztlich für seinen Empfang bestimmten zweiten Endeinrichtung ankommt.

In grundsätzlich gleicher Weise kann die Übertragung eines Anwendungsschlüssels zwischen zwei teilnehmerseitigen Endeinrichtungen auch dann erfolgen, wenn diese bei unterschiedlichen Außenknoten, respektive Zugangsknoten des QMS-WAN angemeldet sind, welche jeweils als VPN Gateway für bei ihnen angemeldete teilnehmerseitige Endeinrichtungen fungieren. Das dargestellte Prinzip der Schlüsselweiterleitung (Schlüsselweiterleitungsprotokoll) wird hierbei auch innerhalb des Kernnetzes, das heißt des QMS-WAN, zwischen mehreren jeweils als Übertragungsstationen darstellende Netzwerkknoten angewendet.

Die zuvor beschriebenen Vorgänge der Übermittlung von Zufallszahlen durch den als VPN Gateway fungierenden Zugangsknoten an mindestens eine teilnehmerseitige Endeinrichtung zur Erzeugung identischer Anwendungsschlüssel sowie des Schlüsselaustauschs beziehungsweise der Schlüsselweiterleitung können in Weiterbildung des Verfahrens auch unter Nutzung disjunkter Übertragungspfade und unter Einsatz des Prinzips des robusten Kombinierers ablaufen. So ist es zum Beispiel denkbar, dass eine teilnehmerseitige Endeinrichtung, wie beispielsweise ein mobiles Endgerät, über die Netze unterschiedlicher Provider, das heißt über disjunkte Netze, an den als VPN Client fungierenden Zugangsknoten angebunden ist. Ferner kann eine entsprechend ausgebildete teilnehmerseitige Endeinrichtung an einen solchen (selbstverständlich ebenfalls entsprechend ausgebildeten) Zugangsknoten einerseits über das Festnetz und andererseits über ein Mobilfunknetz angebunden sein.

Gemäß dem Prinzip des "Robusten Kombinierers" (Robust Combiner) werden zur Absicherung eines technischen Systems mehrere, jeweils grundsätzlich als sicher geltende Sicherheitsmechanismen parallel, respektive redundant, verwendet. Die dahinterstehende Überlegung ist die, dass ein potenzieller Angreifer zwar ein oder zwei der redundant eingesetzten Sicherheitsmechanismen überwinden könnte, aber selten dazu in der Lage sein wird, alle der eingesetzten redundanten Sicherheitsmechanismen zu überwinden oder außer Kraft zu setzen.

Zur Nutzung dieses Prinzips für die Absicherung mehrerer über disjunkte Pfade und/oder Netze zwischen dem Zugangsknoten und einer teilnehmerseitigen Endeinrichtung aufgebauter VPN-Verbindungen können zum Beispiel durch die teilnehmerseitigen Endeinrichtungen unterschiedliche Credentials und durch den Zugangsknoten verschiedene PQC-Zertifikate verwendet werden. Auch können auf den unterschiedlichen Pfaden, mithin für die Absicherung der unterschiedlichen über die Pfade gebildeten VPN-Verbindungen verschiedene Verfahren der PQC zum Einsatz kommen.

Was die Erzeugung der Anwendungsschlüssel und die dazu durch den als VPN Gateway fungierenden Zugangsknoten an mindestens eine teilnehmerseitige Endeinrichtung übertragenen Zufallszahlen anbelangt, können beispielsweise zur Umsetzung des Prinzips des "Robusten Kombinierers" mehrere verschiedene, über die einzelnen disjunkten Pfade übertragene Zufallszahlen für die Erzeugung des finalen Schlüssels, respektive des Anwendungsschlüssels, verwendet werden.

Bei der im Zusammenhang mit der gemeinsamen Erzeugung von Anwendungsschlüsseln durch den Zugangsknoten (als VPN Gateway fungierender Außenknoten des QMS-WAN) und mindestens eine teilnehmerseitige Endeinrichtung verwendeten KDF (Key Derivation Function) kann es sich beispielsweise um eine bitweise XOR-Verknüpfung einer Zufalls, respektive eines Schlüssels mit einem Pre-Shared Secret handeln. Im Hinblick auf die einer bitweisen XOR-Verknüpfung anhaftenden Probleme (beispielsweise bei der Verknüpfung zweier identischer Zahlen oder von zwei Bitfolgen, bei denen alle einzelnen Bits einer der Bitfolgen invers zu den einzelnen Bits der anderen Bitfolge sind) und auf die relative Einfachheit dieser Operation, sollte indessen zu weiteren Erhöhung der Sicherheit hierfür vorzugsweise eine durch das NIST (National Institute of Standards and Technology) standardisierte Key Derivation Function (KDF) verwendet werden. Möglich ist es insoweit zum Beispiel, die jeweilige Zufallszahl nach einem Verschlüsselungsalgorithmus, wie beispielsweise dem Advanced Encryption Standard (AES), mit dem Pre-Shared Secret zu verrechnen.

Ein die Aufgabe lösendes, zur Durchführung des Verfahrens ausgebildetes System für eine quantensicher, Ende-zu-Ende verschlüsselte Datenübertragung zwischen teilnehmerseitigen Endeinrichtungen umfasst neben diesen Endeinrichtungen ein mittels dazu ausgebildeter Netzwerkeinrichtungen quantenmechanisch gesichertes Weitverkehrsnetz (QMS-WAN = Quantum Mechanical Secured Wide Area Network) und mindestens einen mit quantenmechanischen Mitteln ausgestatteten Außenknoten eines solchen QMS-WAN, welcher für die eingangs genannten teilnehmerseitigen Endeinrichtungen einen Zugangsknoten zu diesem QMS-WAN ausbildet. Über diesen Zugangsknoten erhalten mit ihm verbundene, selbst nicht über quantenmechanische Mittel verfügende teilnehmerseitige Endeinrichtungen unter Nutzung der Erfindung einen quantensicheren Zugang zu dem QMS-WAN.

Hierbei fungiert der vorgenannte mindestens eine Außenknoten des QMS-WAN nicht nur als Zugangsknoten zum QMS-WAN, sondern auch als VPN Gateway und ist in dieser Eigenschaft dazu ausgebildet, für sich bei ihm anmeldende teilnehmerseitige Endeinrichtungen ein VPN aufzuspannen sowie gegebenenfalls an eine jeweilige, sich dazu bei ihm erfolgreich authentifizierende teilnehmerseitige Endeinrichtung eine IP-Adresse innerhalb des IP-Adressraums dieses VPN zu übermitteln. Jede sich bei dem mindestens einen Zugangsknoten zum QMS-WAN anmeldende teilnehmerseitige Endeinrichtung ist mit durch den Betreiber des Zugangsknotens zugeteilten Credentials ausgestattet und dazu ausgebildet, sich zur Anmeldung bei dem Zugangsknoten diesem gegenüber mittels dieser Credentials zu authentifizieren.

Ferner sind sowohl der als VPN Gateway fungierende Zugangsknoten als auch jede sich bei ihm anmeldende teilnehmerseitige Endeinrichtung dazu ausgebildet, eine Programmanwendung zur Ausführung eines Verfahrens der Post Quantum Cryptography (PQC) zu verarbeiten, mittels welchem sie eine zwischen ihnen aufgebaute VPN Verbindung unter Nutzung der durch die jeweilige Endeinrichtung zur Anmeldung bei dem Zugangsknoten verwendeten Credentials und eines von dem VPN Gateway zur Authentifizierung gegenüber sich bei ihm anmeldenden Endeinrichtungen verwendeten PQC-Zertifikats quantensicher verschlüsseln.

Der mindestens eine als VPN Gateway fungierende Zugangsknoten zum QMS-WAN verfügt, wie bereits ausgeführt, im Hinblick auf seine Einbindung in das QMS-WAN sowie auf seine Eigenschaft als Außenknoten des QMS-WAN, über quantenmechanische Mittel zur Erzeugung und zum Austausch unter Nutzung quantenmechanischer Prinzipien erzeugter und verteilter quantensicherer Schlüssel. Zum Zweck der Bereitstellung von Zufallszahlen zur Erzeugung quantensicherer Anwendungsschlüssel für die teilnehmerseitigen Endeinrichtungen kann es sich bei den genannten quantenmechanischen Mitteln des Zugangsknotens um einen Quantencomputer, um einen Quantum Random Number Generator (QRMG) oder um einen Physical True Random Number Generator handeln.

Bei Letzteren nutzt man veränderliche Zustände realer technischer oder natürlicher Systeme/Objekte zur Erzeugung von Zufallszahlen aus, wobei sich die vorgenannten Zustände im Grunde willkürlich, aber jedenfalls mit hinreichend großer Zufälligkeit ständig verändern. So kann beispielsweise das sich unter anderem auch durch Plattenzugriffe ständig ändernde Geräusch eines Festplattenlaufwerks eines permanent im Betrieb befindlichen Computers oder das Verhalten einer dauerhaft betriebenen Plasma-Lampe zur Ableitung von Zufallszahlen genutzt werden.

Für den Zugriff auf den Zugangsknoten zum QMS-WAN sind die teilnehmerseitigen Endeinrichtungen vorzugsweise zur Verwendung einer Smart Card ausgebildet oder mit einem Subscriber Identity Module (SIM) ausgestattet, welche oder welches die Verbindungsdaten zum Zugangsknoten und die Credentials zur Authentifizierung der betreffenden Endeinrichtung gegenüber dem Zugangsknoten (VPN Gateway) aufnimmt und hierfür durch einen jeweiligen Ausgeber entsprechend vorprovisioniert wird. Ein entsprechendes SIM kann als eine SIM-Karte oder eSIM (embedded SIM) ausgebildet sein. Die Smart Card oder das SIM einer jeweiligen Endeinrichtung kann hierbei außerdem - entsprechend einer weiter oben angesprochenen Weiterbildung des Verfahrens - ein auch bei dem Zugangsknoten vorliegendes und mit ihm gemeinsam für die Erzeugung von Anwendungsschlüsseln aus Zufallszahlen mittels einer KDF genutztes Pre-shared Secret aufnehmen. Darüber hinaus werden vorzugsweise auch die hierbei gemeinsam erzeugten quantensicheren Anwendungsschlüssel, nebst zugehörigen Identifikatoren, von der Smart Card oder dem SIM aufgenommen.

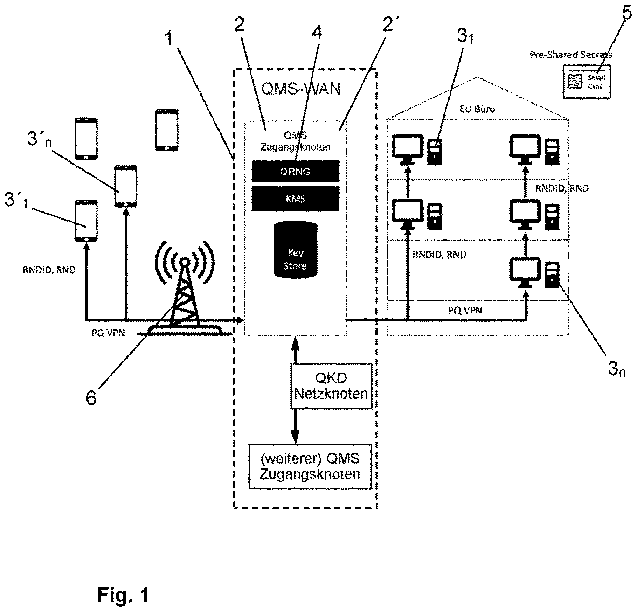

Der prinzipielle Aufbau eines erfindungsgemäß ausgebildeten Systems wird beispielhaft durch die Fig. 1 dargestellt. Bei der Darstellung in der Fig. 1 handelt es sich, wie gesagt, um ein Ausführungsbeispiel der Erfindung, anhand welchem nachfolgend auch nochmals auf Aspekte des erfindungsgemäßen Verfahrens eingegangen werden soll. Vorsorglich sei an dieser Stelle ausdrücklich betont, dass die Erfindung nicht auf die in der Zeichnung dargestellte konkrete Ausbildungsform beschränkt ist.

Zentrales Element des erfindungsgemäßen Systems ist mindestens ein Zugangsknoten 2, welcher als Außenknoten Bestandteil eines quantenmechanisch gesicherten Weitverkehrsnetzes (QMS-WAN 1) ist. Über diesen Zugangsknoten 2 erhalten unterschiedliche teilnehmerseitige Endeinrichtungen 3₁ .... 3ₙ, 3'₁ ... 3'ₙ, wie zum Beispiel in einem Bürogebäude (hier EU Büro) installierte Internetzugangseinrichtungen (IAD) eines mehrere Endgeräte umfassenden Local Area Network (LAN) oder einzelne Endgeräte Zugang zum dem QMS-WAN 1. Der Zugangsknoten 2 ist außerdem so ausgebildet, dass er für die sich bei ihm anmeldenden teilnehmerseitigen Endeinrichtungen 3₁ .... 3ₙ, 3'₁ ... 3'ₙ auch als ein VPN Gateway 2' fungiert.

Aufgrund seiner Zugehörigkeit zum QMS-WAN 1 weist der Zugangsknoten, bei welchem es sich, wie gesagt, um einen Außenknoten des QMS-WAN 1 handelt, quantenmechanische Mittel auf. So kann der betreffende Zugangsknoten2 beispielsweise dazu ausgebildet sein, gemeinsam mit einem anderen Netzwercknoten des QMS-WAN 1 quantensichere Schlüssel nach einem QKD-Verfahren zu erzeugen und auszutauschen. Im Hinblick auf die schon mehrfach angesprochene, durch den Zugangsknoten 2 und zumindest eine teilnehmerseitige Endeinrichtung 3₁ .... 3ₙ, 3'₁ ... 3'ₙ gemeinsam erfolgende Erzeugung quantensicherer Anwendungsschlüssel verfügt der in der Fig. 1 beispielhaft gezeigte Zugangsknoten 2 stattdessen oder außerdem über einen Quantencomputer oder über einen Quantum Random Number Generator (QRNG). Der Außenknoten des QMS-WAN 1, respektive Zugangsknoten 2 zum QMS-WAN 1, fungiert hierbei nicht nur gleichzeitig als VPN Gateway 2', sondern außerdem als Quelle und Verteiler von Entropie, das heißt von Zufallszahlen hoher Entropie mit zugehörigen Identifikatoren.

Die teilnehmerseitigen Endeinrichtungen 3₁ .... 3ₙ, 3'₁ ... 3'ₙ, nämlich sich in dem Gebäude befindende, leitungsgebunden mit dem Zugangsknoten gekoppelte einzelne Endgeräte oder IADs (Endeinrichtungen 3₁ .... 3ₙ) und mit ihnen in einem LAN angeordnete Endgeräte sowie mit dem Zugangsknoten über ein Mobilfunknetz gekoppelte mobile Endgeräte (Endeinrichtungen 3'₁ ... 3'ₙ) außerhalb des Gebäudes melden sich für den Zugang zum QMS-WAN 1 und zur Nutzung des erfindungsgemäßen Verfahrens mittels auf einer Smart Card 5 oder in einem SIM gehaltener Zugangsdaten und Credentials bei dem Zugangsknoten 2 an. Vorzugsweise erfolgt die Anmeldung unter Nutzung der Zweifaktor-Authentifizierung (2FA), indem vom jeweiligen Nutzer der Endeinrichtung 3₁ .... 3ₙ, 3'₁ ... 3'ₙ zusätzlich eine PIN oder eine über einen anderen Kanal an ein Endgerät übermittelte TAN eingegeben werden muss. Der Zugangsknoten 2 spannt in seiner Eigenschaft oder Funktion als VPN Gateway 2' für alle sich erfolgreich bei ihm anmeldenden teilnehmerseitigen Endeinrichtungen 3₁ .... 3ₙ, 3'₁ ... 3'ₙ ein VPN auf, innerhalb welches er ihnen eine IP-Adresse zuteilt.

Das VPN wird als ein PQ-VPN, das heißt als ein mittels Post Quantum Cryptography gesichertes VPN betrieben, indem jede zwischen dem VPN Gateway 2' (Zugangsknoten 2) und einer jeweiligen Endeinrichtung 3₁ .... 3ₙ, 3'₁ ... 3'ₙ aufgebaute VPN Verbindung unter Nutzung der durch eine jeweilige teilnehmerseitige Endeinrichtung 3₁ .... 3ₙ, 3'₁ ... 3'ₙ zur Anmeldung bei dem Zugangsknoten 2 verwendeten Credentials und eines von dem VPN Gateway zur Authentifizierung gegenüber sich bei ihm anmeldenden teilnehmerseitigen Endeinrichtungen 3₁ .... 3ₙ, 3'₁ ... 3'ₙ verwendeten PQC-Zertifikats mittels eines Verfahrens der PQC verschlüsselt wird.

In der gleichen Weise wie die rechts in der Darstellung gezeigten, sich in einem Bürogebäude befindenden teilnehmerseitigen Endeinrichtungen 3₁ .... 3ₙ können ferner Mobilfunkendgeräte (Endeinrichtungen 3'₁ ... 3'ₙ) in das von dem Zugangsknoten 2 in seiner Eigenschaft als VPN Gateway 2'aufgespannte PQ-VPN einbezogen werden. Die in der Darstellung ebenfalls gezeigte Basisstation 6 eines Mobilfunknetzes ist hierbei in Bezug auf das Verfahren, das heißt in Bezug auf den Aufbau PQ gesicherter VPN Verbindungen zwischen den mobilen Endgeräten (Endeinrichtungen 3'₁ ... 3'ₙ) und dem Zugangsknoten 2, vollständig transparent.

Für die vorgestellte Lösung sind folgende Sicherheitsbetrachtungen beachtlich:
Die Sicherheit des dargestellten Verfahrens ist stark von der Sicherheit der Speicherung der VPN Zugangsdaten, respektive Credentials, sowie, im Hinblick auf die entsprechend einer vorgesehenen Ausbildungsform erzeugten quantensicheren Anwendungsschlüssel, von der Sicherheit der Speicherung und Verteilung des Pre-shared Secret (PSS) abhängig. Bekommt ein Angreifer Zugriff auf alle diese Daten, so ist das vorgestellte Verfahren nicht mehr sicher. Jedoch lassen sich diese Daten über Smart Cards 5 / eSIM und die erzwungene Eingabe von PIN Codes und / oder 2FA zusätzlich schützen. Auch sollte die maximale Eingabemöglichkeit der Sicherheitsmerkmale limitiert werden.

Das dargestellte Verfahren kombiniert in seiner umfassenden Ausgestaltung zwei disjunkte quantensichere Protokolle. So ist ein PQ-VPN einerseits über harte Mathematik gesichert und gilt als quantensicher - allerdings für PQC nicht beweisbar. Die Sicherheit der Entropieverteilung (ED = Entropy Distribution) hängt von der Authentifizierung der Entropiequelle (die Entropiequelle ist der Zufallszahlen hoher Entropie zur Erzeugung quantensicherer Anwendungsschlüssel zur Verfügung stellende Zugangsknoten, respektive das VPN Gateway 2' für das PQ-VPN mit dem QRNG 4) und der Sicherheit des PSS ab, somit von unterschiedlichen Faktoren. Beide Aspekte ergänzen sich und gleichen ihre jeweiligen Nachteile aus und ermöglichen so eine sichere Ende-zu-Ende-Verschlüsselung.

Die Nutzung beider Aspekte in disjunkten Netzwerken (zum Beispiel Festnetz/Mobil) mit jeweils unterschiedlichen PSS und PQC VPN Zugangsdaten und unter Anwendung einer robusten Kombination erhöht die Sicherheit des Verfahrens multiplikativ. Auch könnten unterschiedliche PQC Algorithmen verwendet werden. Potenzielle Angreifer müssten in diesem Falle nicht nur unterschiedliche (disjunkte) Netzwerke kontrollieren, sondern auch unterschiedliche kryptographische Protokolle angreifen können.

Abschließend ein beispielhafter Überblick über zur Authentifizierung verwendbare PQC-Verfahren/PQC-Signierverfahren gegeben werden, welche im Rahmen der Erfindung zum Einsatz kommen können.

### Verfügbare Post Quantum Sianaturverfahren:

### Key Encapsulation Mechanisms (KEM):

- BIKE: BIKE-L1, BIKE-L3
- Classic McEliece: Classic-McEliece-348864†, Classic-McEliece-348864f†, Classic-McEliece-460896†, Classic-McEliece-460896f†, Classic-McEliece-6688128†, Classic-McEliece-6688128f†, Classic-McEliece-6960119†, Classic-McEliece-6960119f†, Classic-McEliece-8192128†, Classic-McEliece-8192128f†
- FrodoKEM: FrodoKEM-640-AES, FrodoKEM-640-SHAKE, FrodoKEM-976-AES, FrodoKEM-976-SHAKE, FrodoKEM-1344-AES, FrodoKEM-1344-SHAKE
- HQC: HQC-128, HQC-192, HQC-256†
- Kyber: Kyber512, Kyber512-90s, Kyber768, Kyber768-90s, Kyber1024, Kyber1024-90s
- NTRU: NTRU-HPS-2048-509, NTRU-HPS-2048-677, NTRU-HPS-4096-821, NTRU-HPS-4096-1229, NTRU-HRSS-701, NTRU-HRSS-1373
- NTRU-Prime: ntrulpr653, ntrulpr761, ntrulpr857, ntrulpr1277, sntrup653, sntrup761, sntrup857, sntrup1277
- SABER: LightSaber-KEM, Saber-KEM, FireSaber-KEM
- SIKE: SIDH-p434, SIDH-p434-compressed, SIDH-p503, SIDH-p503-compressed, SIDH-p610, SIDH-p610-compressed, SIDH-p751, SIDH-p751-compressed, SIKE-p434, SIKE-p434-compressed, SIKE-p503, SIKE-p503-compressed, SIKE-p610, SIKE-p610-compressed, SIKE-p751, SIKE-p751-compressed

### Signatur Algorithmen (SIG):

- CRYSTALS-Dilithium: Dilithium2, Dilithium3, Dilithium5, Dilithium2-AES, Dilithium3-AES, Dilithium5-AES
- Falcon: Falcon-512, Falcon-1024
- Picnic: picnic_L1_FS, picnic_L1_UR, picnic_L1_full, picnic_L3_FS, picnic_L3_UR, picnic_L3_full, picnic_L5_FS, picnic_L5_UR, picnic_L5_full, picnic3_L1, picnic3_L3, picnic3_L5
- Rainbow: Rainbow-I-Classic, Rainbow-I-Circumzenithal, Rainbow-I-Compressed, Rainbow-III-Classic†, Rainbow-III-Circumzenithal†, Rainbow-III-Compressed†, Rainbow-V-Classic†, Rainbow-V-Circumzenithal†, Rainbow-V-Compressed†
- SPHINCS+-Haraka: SPHINCS+-Haraka-128f-robust, SPHINCS+-Haraka-128f-simple, SPHINCS+-Haraka-128s-robust, SPHINCS+-Haraka-128s-simple, SPHINCS+-Haraka-192f-robust, SPHINCS+-Haraka-192f-simple, SPHINCS+-Haraka-192s-robust, SPHINCS+-Haraka-192s-simple, SPHINCS+-Haraka-256f-robust, SPHINCS+-Haraka-256f-simple, SPHINCS+-Haraka-256s-robust, SPHINCS+-Haraka-256s-simple
- SPHINCS+-SHA256: SPHINCS+-SHA256-128f-robust, SPHINCS+-SHA256-128f-simple, SPHINCS+-SHA256-128s-robust, SPHINCS+-SHA256-128s-simple, SPHINCS+-SHA256-192f-robust, SPHINCS+-SHA256-192f-simple, SPHINCS+-SHA256-192s-robust, SPHINCS+-SHA256-192s-simple, SPHINCS+-SHA256-256f-robust, SPHINCS+-SHA256-256f-simple, SPHINCS+-SHA256-256s-robust, SPHINCS+-SHA256-256s-simple
- SPHINCS+-SHAKE256: SPHINCS+-SHAKE256-128f-robust, SPHINCS+-SHAKE256-128f-simple, SPHINCS+-SHAKE256-128s-robust, SPHINCS+-SHAKE256-128s-simple, SPHINCS+-SHAKE256-192f-robust, SPHINCS+-SHAKE256-192f-simple, SPHINCS+-SHAKE256-192s-robust, SPHINCS+-SHAKE256-192s-simple, SPHINCS+-SHAKE256-256f-robust, SPHINCS+-SHAKE256-256f-simple, SPHINCS+-SHAKE256-256s-robust, SPHINCS+-SHAKE256-256s-simple

## Patentansprüche

1. Verfahren für eine quantensichere, Ende-zu-Ende verschlüsselte Datenübertragung zwischen teilnehmerseitigen Endeinrichtungen (3₁ .... 3ₙ, 3'₁ ... 3'ₙ), bei welchem über ein Quantum Mechanical Secured Wide Area Network QMS-WAN (1), das heißt über ein mittels dazu ausgebildeter Netzwerkeinrichtungen quantenmechanisch gesichertes Weitverkehrsnetz übertragene Daten auch auf der letzten Meile, nämlich zwischen einem mit quantenmechanischen Mitteln ausgestatteten Außenknoten des QMS-WAN (1) und den teilnehmerseitigen, selbst nicht über quantenmechanische Mittel verfügenden Endeinrichtungen (3₁ .... 3ₙ, 3'₁ ... 3'ₙ), für welche der Außenknoten des QMS-WAN 1 einen Zugangsknoten (2) zu dem QMS-WAN (1) ausbildet, quantensicher übertragen werden, **dadurch gekennzeichnet, dass** die teilnehmerseitigen, sich zur Nutzung des Verfahrens bei dem Zugangsknoten (2) zum QMS-WAN (1) anmeldenden Endeinrichtungen (3₁ .... 3ₙ, 3'₁ ... 3'ₙ) durch den Zugangsknoten (2) zu einem Virtual Private Network VPN zusammengeführt werden, wobei sich die Endeinrichtungen (3₁ .... 3ₙ, 3'₁ ... 3'ₙ) zur Anmeldung bei dem auch als VPN Gateway (2') fungierenden Zugangsknoten (2) mithilfe ihnen durch den Betreiber des Zugangsknotens (2) zugeteilter Credentials authentifizieren und dass das VPN als ein PQ-VPN, nämlich als ein durch Post Quantum Cryptography PQC gesichertes VPN, betrieben wird, indem eine zwischen dem als VPN Gateway (2') fungierenden Zugangsknoten (2) zum QMS-WAN (1) und einer jeweiligen bei diesem angemeldeten teilnehmerseitigen Endeinrichtung (3₁ .... 3ₙ, 3'₁ ... 3'ₙ) aufgebaute VPN-Verbindung unter Nutzung der von der teilnehmerseitigen Endeinrichtung (3₁ .... 3ₙ, 3'₁ ... 3'ₙ) zur Anmeldung verwendeten Credentials und eines von dem VPN Gateway (2') zur Authentifizierung gegenüber sich bei ihm anmeldenden teilnehmerseitigen Endeinrichtungen (3₁ .... 3ₙ, 3'₁ ... 3'ₙ) verwendeten PQC-Zertifikats nach einem Verfahren der Post Quantum Cryptography PQC verschlüsselt wird.

2. Verfahren nach Anspruch 1, **dadurch gekennzeichnet, dass** sich eine teilnehmerseitige Endeinrichtung (3₁ .... 3ₙ, 3'₁ ... 3'ₙ) zur Anmeldung bei dem als VPN Gateway (2') fungierenden Zugangsknoten (2) zum QMS-WAN (1) mittels Zweifaktor-Authentifikation authentifiziert.

3. Verfahren nach einem der Ansprüche 1 oder 2, **dadurch gekennzeichnet, dass** der als VPN Gateway (2') fungierende Zugangsknoten (2) zum QMS-WAN (1) an mindestens eine bei ihm angemeldete teilnehmerseitige Endeinrichtung (3₁ .... 3ₙ, 3'₁ ... 3'ₙ) über die zu dieser aufgebaute, durch PQC verschlüsselte VPN-Verbindung Zufallszahlen hoher Entropie sowie jeweils eine dieser Zufallszahlen eindeutig identifizierende Identifier übermittelt und dass der Zugangsknoten (2) und die diese Zufallszahlen empfangende mindestens eine teilnehmerseitige Endeinrichtung (3₁ .... 3ₙ, 3'₁ ... 3'ₙ) unter Verwendung eines sowohl bei dem Zugangsknoten (2) als auch bei der betreffenden Endeinrichtung (3₁ .... 3ₙ, 3'₁ ... 3'ₙ) vorliegenden gemeinsamen Pre-shared Secret durch Anwendung einer Key Derivation Function KDF, nämlich derselben Prozessierungsvorschrift identische quantensichere Anwendungsschlüssel erzeugen, welche der Zugangsknoten (2) und die mindestens eine teilnehmerseitige Endeinrichtung (3₁ .... 3ₙ, 3'₁ ... 3'ₙ) zur späteren Verwendung jeweils bei sich lokal und zusammen mit dem zugehörigen Identifikator in einem sicheren Speicher ablegen.

4. Verfahren nach Anspruch 3, **dadurch gekennzeichnet, dass** zwei teilnehmerseitige Endeinrichtungen (3₁ .... 3ₙ, 3'₁ ... 3'ₙ) symmetrisch verschlüsselte Daten austauschen, wobei sie hierfür einen quantensicheren Schlüssel verwenden, zu welchem eine erste der beiden Endeinrichtungen (3₁ .... 3ₙ, 3'₁ ... 3'ₙ) den Identifikator dieses bei ihr gespeicherten Schlüssels über einen klassischen Kanal an die andere, das heißt die zweite Endeinrichtung (3₁ .... 3ₙ, 3'₁ ... 3'ₙ) überträgt, wobei jedoch im Falle dessen, dass die erste Endeinrichtung (3₁ .... 3ₙ, 3'₁ ... 3'ₙ) als Antwort auf die Übertragung des Identifikators von der zweiten Endeinrichtung (3₁ .... 3ₙ, 3'₁ ... 3'ₙ) eine Nachricht empfängt, wonach der durch diesen Identifikator bezeichnete Schlüssel nicht bei der zweiten Endeinrichtung (3₁ .... 3ₙ, 3'₁ ... 3'ₙ) vorliegt, der betreffende quantensichere Schlüssel selbst von der ersten Endeinrichtung (3₁ .... 3ₙ, 3'₁ ... 3'ₙ) an die zweite Endeinrichtung (3₁ .... 3ₙ, 3'₁ ... 3'ₙ) über einen, mehrere Übertragungsstationen, nämlich zumindest die beiden teilnehmerseitigen Endeinrichtungen (3₁ .... 3ₙ, 3'₁ ... 3'ₙ) sowie den das PQ-VPN aufspannenden Zugangsknoten (2), umfassenden Übertragungspfad mittels eines Schlüsselweiterleitungsprotokolls unter Nutzung einer Key Forwarding Function übertragen wird.

5. Verfahren nach Anspruch 3 oder 4, **dadurch gekennzeichnet, dass** die Übertragung von Zufallszahlen zur Erzeugung quantensicherer, sowohl bei dem Zugangsknoten (2) als auch bei der mindestens einen teilnehmerseitigen Endeinrichtung (3₁ .... 3ₙ, 3'₁ ... 3'ₙ) abgelegter Anwendungsschlüssel oder die Übertragung bereits erzeugter quantensicherer Anwendungsschlüssel nach einem Schlüsselweiterleitungsprotokoll unter Nutzung einer Key Forwarding Function nach dem Prinzip des robusten Kombinierers über mindestens zwei disjunkte Pfade des PQ-VPN erfolgt.

6. System für eine quantensicher, Ende-zu-Ende verschlüsselte Datenübertragung zwischen teilnehmerseitigen Endeinrichtungen (3₁ .... 3ₙ, 3'₁ ... 3'ₙ), mit einem Quantum Mechanical Secured Wide Area Network QMS-WAN (1), das heißt einem mittels dazu ausgebildeter Netzwerkeinrichtungen quantenmechanisch gesicherten Weitverkehrsnetz und mit mindestens einem, mit quantenmechanischen Mitteln ausgestatteten Außenknoten des QMS-WAN (1), der einen Zugangsknoten (2) zu dem QMS-WAN (1) ausbildet, über welchen mit ihm verbundene, selbst nicht über quantenmechanische Mittel verfügende teilnehmerseitige Endeinrichtungen (3₁ .... 3ₙ, 3'₁ ... 3'ₙ) einen quantensicheren Zugang zu dem QMS-WAN (1) erhalten, wobei jede sich bei dem mindestens einen Zugangsknoten (2) zum QMS-WAN (1) anmeldende teilnehmerseitige Endeinrichtung (3₁ .... 3ₙ, 3'₁ ... 3'ₙ) mit durch den Betreiber des Zugangsknotens (2) zugeteilten Credentials ausgestattet und dazu ausgebildet ist, sich zur Anmeldung bei dem Zugangsknoten (2) diesem gegenüber mittels dieser Credentials zu authentifizieren, **dadurch gekennzeichnet,**
- **dass** der mindestens eine Zugangsknoten zum QMS-WAN auch als VPN Gateway (2') fungiert und dazu ausgebildet ist, für sich bei dem Zugangsknoten (2) anmeldende teilnehmerseitige Endeinrichtungen (3₁ .... 3ₙ, 3'₁ ... 3'ₙ) ein VPN aufzuspannen und
- **dass** der mindestens eine als VPN Gateway (2') fungierende Zugangsknoten (2) als auch jede sich bei ihm anmeldende teilnehmerseitige Endeinrichtung (3₁ .... 3ₙ, 3'₁ ... 3'ₙ) dazu ausgebildet sind, eine Programmanwendung zur Ausführung eines Verfahrens der Post Quantum Cryptography zu verarbeiten, mit welchem sie eine zwischen ihnen aufgebaute VPN-Verbindung unter Nutzung der durch eine jeweilige teilnehmerseitige Endeinrichtung (3₁ .... 3ₙ, 3'₁ ... 3'ₙ) zur Anmeldung bei dem Zugangsknoten (2) verwendeten Credentials und eines von dem Zugangsknoten (2) zur Authentifizierung gegenüber sich bei ihm anmeldenden teilnehmerseitigen Endeinrichtungen (3₁ .... 3ₙ, 3'₁ ... 3'ₙ) verwendeten PQC-Zertifikats quantensicher verschlüsseln, so dass es sich bei dem durch den als VPN Gateway (2') fungierenden Zugangsknoten (2) aufgespannten VPN um ein PQ-VPN, das heißt um ein durch Post Quantum Cryptography gesichertes VPN, handelt.

7. System nach Anspruch 6, **dadurch gekennzeichnet, dass** eine jeweilige teilnehmerseitige Endeinrichtung (3₁ .... 3ₙ, 3'₁ ... 3'ₙ) ausgebildet ist zur Verwendung einer Smart Card (5) oder eines als SIM-Karte oder eSIM ausgebildeten Subscriber Identity Module SIM, welche oder welches die Verbindungsdaten für den Zugangsknoten (2) zum QMS-WAN (1) sowie die zur Authentifizierung bei dem Zugangsknoten (2) und für die Sicherung der Verbindung mit dem Zugangsknoten (2) mittels des PQC-Verfahrens verwendeten Credentials aufnimmt.

8. System nach Anspruch 6 oder 7, **dadurch gekennzeichnet, dass** jede sich bei dem mindestens einen Zugangsknoten (2) zum QMS-WAN (1) anmeldende teilnehmerseitige Endeinrichtung (3₁ .... 3ₙ, 3'₁ ... 3'ₙ) und der auch als VPN Gateway (2') fungierende Zugangsknoten (2) mit einem bei ihnen zuvor als Pre-shared Secret hinterlegten gemeinsamen Geheimnis ausgestattet und dazu ausgebildet sind, unter Verwendung dieses gemeinsamen Pre-shared Secret durch Anwendung einer Key Derivation Function KDF, nämlich derselben Prozessierungsvorschrift identische quantensichere Anwendungsschlüssel mitjeweils einem zugehörigen Identifikator zu erzeugen und in einem lokalen sicheren Speicher abzulegen.

9. System nach Anspruch 8, wobei eine jeweilige teilnehmerseitige Endeinrichtung mit einer Smart Card (5) oder mit einem als SIM-Karte oder eSIM ausgebildeten Subscriber Identity Module SIM ausgestattet ist, welche oder welches den sicheren Speicher zur Ablage der erzeugten quantensicheren Anwendungsschlüssel und der jeweils einen dieser Anwendungsschlüssel eindeutig bezeichnenden Identifikatoren ausbildet.

10. System nach einem der Ansprüche 6 bis 9, **dadurch gekennzeichnet, dass** der mindestens eine als VPN-Gateway (2') fungierende Zugangsknoten (2) einen Quantum Random Number Generator QRNG (4) zum Generieren von Zufallszahlen hoher Entropie umfasst.

11. System nach einem der Ansprüche 6 bis 10, **dadurch gekennzeichnet, dass** der mindestens eine als VPN-Gateway (2') fungierende Zugangsknoten (2) einen Physical True Random Number Generator zum Generieren von Zufallszahlen hoher Entropie umfasst.

12. System nach einem der Ansprüche 6 bis 11, **dadurch gekennzeichnet, dass** der mindestens eine als VPN-Gateway (2') fungierende Zugangsknoten (2) einen Quantencomputer zum Generieren von Zufallszahlen hoher Entropie umfasst.

13. System nach Anspruch 12, **dadurch gekennzeichnet, dass** der mindestens eine als VPN-Gateway (2') fungierende Zugangsknoten (2) einen klassischen Computer umfasst, welcher mit einer, bei ihrer Verarbeitung, die von dem Quantencomputer erzeugten Zufallszahlen hinsichtlich ihrer Entropie validierenden Programmanwendung ausgestattet ist.

14. System nach einem der Ansprüche 6 bis 13, **dadurch gekennzeichnet, dass** der als VPN Gateway (2') fungierende Zugangsknoten (2) mit den teilnehmerseitigen Endeinrichtungen (3₁ .... 3ₙ, 3'₁ ... 3'ₙ) in dem PQ-VPN jeweils über zwei disjunkte Pfade verbunden ist.

15. System nach Anspruch 14, **dadurch gekennzeichnet, dass** die teilnehmerseitigen Endeinrichtungen (3₁ .... 3ₙ, 3'₁ ... 3'ₙ) und der als VPN Gateway (2') fungierende Zugangsknoten (2) zur Nutzung zweier unterschiedlicher Übertragungstechniken, nämlich zur Nutzung je einer dieser Übertragungstechniken auf einem jeweiligen der beiden disjunkten Netzwerkpfade, ausgebildet sind.

## Claims

1. Method for quantum-secured, end-to-end-encrypted data transmission between subscriber-side terminals (3₁ .... 3ₙ, 3'₁ ... 3'ₙ), in which data transmitted over a quantum mechanical secured wide area network QMS-WAN (1), that is to say over a wide area network that is quantum-mechanically secured by way of network devices designed for this purpose, are also transmitted in quantum-secured form on the last mile, namely between an outer node, furnished with quantum-mechanical means, of the QMS-WAN (1) and the subscriber-side terminals (3₁ .... 3ₙ, 3'₁ ... 3'ₙ), which do not have their own quantum mechanical means and for which the outer node of the QMS-WAN (1) forms an access node (2) to the QMS-WAN (1), **characterized in that** the subscriber-side terminals (3₁ .... 3ₙ, 3'₁ ... 3' n) registering with the access node (2) to the QMS-WAN (1) in order to use the method are combined by the access node (2) to form a virtual private network VPN, wherein the terminals (3₁ .... 3ₙ, 3'₁ ... 3'ₙ), in order to register with the access node (2), which also functions as VPN gateway (2'), authenticate themselves with the aid of credentials assigned to them by the operator of the access node (2), and **in that** the VPN is operated as a PQ-VPN, namely as a VPN secured by post quantum cryptography PQC, by virtue of a VPN connection set up between the access node (2), functioning as VPN gateway (2'), to the QMS-WAN (1) and a respective subscriber-side terminal (3₁ .... 3ₙ, 3'₁ ... 3'ₙ) registered therewith being encrypted in accordance with a post quantum cryptography PQC method using the credentials used for registration by the subscriber-side terminal (3₁ .... 3ₙ, 3'₁ ... 3'ₙ) and a PQC certificate used by the VPN gateway (2') for the authentication of subscriber-side terminals (3₁ .... 3ₙ, 3'₁ ... 3'ₙ) registering therewith.

2. Method according to Claim 1, **characterized in that** a subscriber-side terminal (3₁ .... 3ₙ, 3'₁ ... 3'ₙ) authenticates itself by way of dual factor authentication in order to register with the access node (2), functioning as VPN gateway (2'), to the QMS-WAN (1).

3. Method according to either of Claims 1 and 2, **characterized in that** the access node (2), functioning as VPN gateway (2'), to the QMS-WAN (1) transmits high-entropy random numbers and identifiers uniquely identifying in each case one of these random numbers to at least one subscriber-side terminal (3₁ .... 3ₙ, 3'₁ ... 3'ₙ) registered therewith over the PQC-encrypted VPN connection set up thereto, and **in that** the access node (2) and the at least one subscriber-side terminal (3₁ .... 3ₙ, 3'₁ ... 3'ₙ) receiving these random numbers generate identical quantum-secured application keys using a common pre-shared secret, available both at the access node (2) and at the terminal (3₁ .... 3ₙ, 3'₁ ... 3'ₙ) in question, by applying a key derivation function KDF, namely the same processing rule, these quantum-secured application keys being stored by the access node (2) and the at least one subscriber-side terminal (3₁ .... 3ₙ, 3'₁ ... 3'ₙ) in a secure memory for later use in each case locally and together with the associated identifier.

4. Method according to Claim 3, **characterized in that** two subscriber-side terminals (3₁ .... 3ₙ, 3'₁ ... 3' n) exchange symmetrically encrypted data, using a quantum-secured key to do so, to which end a first of the two terminals (3₁ .... 3ₙ, 3'₁ ... 3'ₙ) transmits the identifier of this key that it stores to the other, that is to say second terminal (3₁ .... 3ₙ, 3'₁ ... 3'ₙ) over a conventional channel, wherein, however, in the event that the first terminal (3₁ .... 3ₙ, 3'₁ ... 3'ₙ), in response to the transmission of the identifier from the second terminal (3₁ .... 3ₙ, 3'₁ ... 3'ₙ), receives a message according to which the key referenced by this identifier is not present at the second terminal (3₁ .... 3ₙ, 3'₁ ... 3'ₙ), the quantum-secured key in question is transmitted itself from the first terminal (3₁ .... 3ₙ, 3'₁ ... 3'ₙ) to the second terminal (3₁ .... 3ₙ, 3'₁ ... 3'ₙ) via a transmission path that comprises multiple transmission stations, namely at least the two subscriber-side terminals (3₁ .... 3ₙ, 3'₁ ... 3'ₙ) and the access node (2) spanning the PQ-VPN, by way of a key forwarding protocol using a key forwarding function.

5. Method according to Claim 3 or 4, **characterized in that** the transmission of random numbers in order to generate quantum-secured application keys that are stored both at the access node (2) and at the at least one subscriber-side terminal (3₁ .... 3ₙ, 3'₁ ... 3'ₙ), or the transmission of pre-generated quantum-secured application keys, takes place over at least two disjunct paths of the PQ-VPN in accordance with a key forwarding protocol using a key forwarding function in accordance with the robust combiner principle.

6. System for quantum-secured, end-to-end-encrypted data transmission between subscriber-side terminals (3₁ .... 3ₙ, 3'₁ ... 3'ₙ), comprising a quantum mechanical secured wide area network QMS-WAN (1), that is to say a wide area network that is quantum-mechanically secured by way of network devices designed for this purpose, and comprising at least one outer node, furnished with quantum mechanical means, of the QMS-WAN (1), which forms an access node (2) to the QMS-WAN (1), via which subscriber-side terminals (3₁ .... 3ₙ, 3'₁ ... 3'ₙ) that are connected thereto and do not have their own quantum mechanical means obtain quantum-secured access to the QMS-WAN (1), wherein each subscriber-side terminal (3₁ .... 3ₙ, 3'₁ ... 3'ₙ) registering with the at least one access node (2) to the QMS-WAN (1) is furnished with credentials assigned by the operator of the access node (2) and is designed to authenticate itself to the access node (2) by way of these credentials in order to register therewith, **characterized**
- **in that** the at least one access node to the QMS-WAN also functions as VPN gateway (2') and is designed to span a VPN for subscriber-side terminals (3₁ .... 3ₙ, 3'₁ ... 3'ₙ) registering with the access node (2), and
- **in that** the at least one access node (2) functioning as VPN gateway (2') and each subscriber-side terminal (3₁ .... 3ₙ, 3'₁ ... 3'ₙ) registering therewith are designed to execute a program application for carrying out a post quantum cryptography method, by way of which they encrypt, in quantum-secured form, a VPN connection set up between them using the credentials used by a respective subscriber-side terminal (3₁ .... 3ₙ, 3'₁ ... 3'ₙ) to register with the access node (2) and a PQC certificate used by the access node (2) to authenticate itself with subscriber-side terminals (3₁ .... 3ₙ, 3'₁ ... 3'ₙ) registering therewith, such that the VPN spanned by the access node (2) functioning as VPN gateway (2') is a PQ-VPN, that is to say a post quantum cryptography-secured VPN.

7. System according to Claim 6, **characterized in that** a respective subscriber-side terminal (3₁ .... 3ₙ, 3'₁ ... 3'ₙ) is designed to use a smart card (5) or a subscriber identity module SIM in the form of a SIM card or eSIM, which records the connection data for the access node (2) to the QMS-WAN (1) and the credentials used for authentication with the access node (2) and for securing the connection to the access node (2) by way of the PQC method.

8. System according to Claim 6 or 7, **characterized in that** each subscriber-side terminal (3₁ .... 3ₙ, 3'₁ ... 3'ₙ) registering with the at least one access node (2) to the QMS-WAN (1) and the access node (2) also functioning as VPN gateway (2') are furnished with a shared secret that is stored therewith beforehand as a pre-shared secret and are designed to generate identical quantum-secured application keys each having an associated identifier using this common pre-shared secret by applying a key derivation function KDF, namely the same processing rule, and to store same in a local secure memory.

9. System according to Claim 8, wherein a respective subscriber-side terminal is furnished with a smart card (5) or with a subscriber identity module SIM in the form of a SIM card or eSIM, which forms the secure memory for storing the generated quantum-secured application keys and the identifiers uniquely identifying in each case one of these application keys.

10. System according to one of Claims 6 to 9, **characterized in that** the at least one access node (2) functioning as VPN gateway (2') comprises a quantum random number generator QRNG (4) for generating high-entropy random numbers.

11. System according to one of Claims 6 to 10, **characterized in that** the at least one access node (2) functioning as VPN gateway (2') comprises a physical true random number generator for generating high-entropy random numbers.

12. System according to one of Claims 6 to 11, **characterized in that** the at least one access node (2) functioning as VPN gateway (2') comprises a quantum computer for generating high-entropy random numbers.

13. System according to Claim 12, **characterized in that** the at least one access node (2) functioning as VPN gateway (2') comprises a conventional computer that is furnished with a program application that, when it is executed, validates the random numbers generated by the quantum computer with regard to their entropy.

14. System according to one of Claims 6 to 13, **characterized in that** the access node (2) functioning as VPN gateway (2') is connected to the subscriber-side terminals (3₁ .... 3ₙ, 3'₁ ... 3'ₙ) in the PQ-VPN in each case via two disjunct paths.

15. System according to Claim 14, **characterized in that** the subscriber-side terminals (3₁ .... 3ₙ, 3'₁ ... 3'ₙ) and the access node (2) functioning as VPN gateway (2') are designed to use two different transmission techniques, namely to use a respective one of these transmission techniques on a respective one of the two disjunct network paths.

## Revendications

1. Procédé pour une transmission de données chiffrée de bout en bout à sécurité quantique entre des terminaux côté abonné (3₁ ... 3ₙ, 3'₁ ... 3'ₙ), dans lequel, des données transmises par un « quantum mechanical secured wide area network », QMS-WAN, (1), c'est-à-dire par un réseau étendu à sécurité mécanique quantique, au moyen de dispositifs de réseau réalisés à cet effet, sont transmises à sécurité quantique même sur le dernier kilomètre, notamment entre un noeud extérieur du QMS-WAN (1), équipé de moyens mécaniques quantiques, et les terminaux côté abonné (3₁ ... 3ₙ, 3'₁ ... 3'ₙ) ne disposant pas eux-mêmes de moyens mécaniques quantiques et pour lesquels le noeud extérieur du QMS-WAN 1 réalise un noeud d'accès (2) au QMS-WAN (1),
**caractérisé en ce que** les terminaux côté abonné (3₁ ... 3ₙ, 3'₁ ... 3'ₙ) qui se connectent au noeud d'accès (2) au QMS-WAN (1) pour utiliser le procédé sont regroupés par le noeud d'accès (2) en un réseau privé virtuel, VPN, dans lequel, pour la connexion auprès du noeud d'accès (2) servant aussi de passerelle VPN (2'), les terminaux (3₁ ... 3ₙ, 3'₁ ... 3'ₙ) s'authentifient à l'aide d'identifiants qui leur sont attribués par l'opérateur du noeud d'accès (2), et **en ce que** le VPN est exploité en tant que PQ-VPN, notamment en tant que VPN sécurisé par cryptographie post-quantique, PQC, **en ce qu'**une liaison VPN établie entre le noeud d'accès (2) au QMS-WAN (1), servant de passerelle VPN (2'), et un terminal côté abonné (3₁ ... 3ₙ, 3'₁ ... 3'ₙ) respectif, connecté à celui-ci, est chiffrée en se servant des identifiants utilisés par le terminal côté abonné (3₁ ... 3ₙ, 3'₁ ... 3'ₙ) pour la connexion et d'un certificat PQC utilisé par la passerelle VPN (2') pour l'authentification vis-à-vis des terminaux côté abonné (3₁ ... 3ₙ, 3'₁ ... 3'ₙ) qui se connectent à celui-ci selon un procédé de cryptographie post-quantique PQC.

2. Procédé selon la revendication 1, **caractérisé en ce qu'**un terminal côté abonné (3₁ ... 3ₙ, 3'₁ ... 3'ₙ) s'authentifie par authentification à deux facteurs pour la connexion auprès du noeud d'accès (2) au QMS-WAN (1), servant de passerelle VPN (2').

3. Procédé selon l'une quelconque des revendications 1 ou 2, **caractérisé en ce que** le noeud d'accès (2) au QMS-WAN (1), servant de passerelle VPN (2'), transmet à au moins un terminal côté abonné (3₁ ... 3ₙ, 3'₁ ... 3'ₙ) connecté à celui-ci, par la liaison VPN établie avec celui-ci et chiffrée PQC, des nombres aléatoires à haute entropie ainsi que respectivement un identifiant qui identifie de manière univoque respectivement l'un de ces nombres aléatoires, et **en ce que** le noeud d'accès (2) et ledit au moins un terminal côté abonné (3₁ ... 3ₙ, 3'₁ ... 3'ₙ) recevant ces nombres aléatoires génèrent des clés d'application à sécurité quantique identiques en utilisant un secret pré-partagé commun, présent à la fois sur le noeud d'accès (2) et sur le terminal (3₁ ... 3ₙ, 3'₁ ... 3'ₙ) en question, par l'application d'une fonction de dérivation de clé, KDF, notamment la même règle de traitement, lesdites clés étant sauvegardées par le noeud d'accès (2) et ledit au moins un terminal côté abonné (3₁ ... 3ₙ, 3'₁ ... 3'ₙ) pour une utilisation ultérieure, respectivement localement et conjointement avec l'identificateur associé dans une mémoire sécurisée.

4. Procédé selon la revendication 3, **caractérisé en ce que** deux terminaux côté abonné (3₁ ... 3ₙ, 3'₁ ... 3'ₙ) échangent des données chiffrées de manière symétrique, dans lequel ils utilisent à cet effet une clé à sécurité quantique pour laquelle un premier des deux terminaux (3₁ ... 3ₙ, 3'₁ ... 3'ₙ) transmet l'identificateur de cette clé sauvegardée chez lui par un canal conventionnel à l'autre, c'est-à-dire le deuxième terminal (3₁ ... 3ₙ, 3'₁ ... 3'n), cependant dans lequel, si le premier terminal (3₁ ... 3ₙ, 3'₁ ... 3'ₙ) reçoit en réponse à la transmission de l'identificateur un message du deuxième terminal (3₁ ... 3ₙ, 3'₁ ... 3'n) selon lequel la clé désignée par cet identificateur n'est pas présente sur le deuxième terminal (3₁ ... 3ₙ, 3'₁ ... 3'n), la clé à sécurité quantique concernée elle-même est transmise par le premier terminal (3₁ ... 3ₙ, 3'₁ ... 3'ₙ) au deuxième terminal (3₁ ... 3ₙ, 3'₁ ... 3'ₙ) par un chemin de transmission comprenant plusieurs stations de transmission, notamment aux moins les deux terminaux côté abonné (3₁ ... 3ₙ, 3'₁ ... 3'ₙ) ainsi que le noeud d'accès (2) constituant le PQ-VPN, au moyen d'un protocole de retransmission de clé en utilisant une fonction de retransmission de clé.

5. Procédé selon la revendication 3 ou 4, **caractérisé en ce que** la transmission de nombres aléatoires pour la génération de clés d'application à sécurité quantique, sauvegardées à la fois sur le noeud d'accès (2) et sur ledit au moins un terminal côté abonné (3₁ ... 3ₙ, 3'₁ ... 3'ₙ) ou la transmission de clés d'application à sécurité quantique déjà générées est effectuée selon un protocole de retransmission de clé en utilisant une fonction de retransmission de clé selon le principe du combineur robuste sur au moins deux chemins disjoints du PQ-VPN.

6. Système pour une transmission de données chiffrée de bout en bout à sécurité quantique entre des terminaux côté abonné (3₁ ... 3ₙ, 3'₁ ... 3'ₙ),
comprenant un « quantum mechanical secured wide area network », QMS-WAN, (1), c'est-à-dire un réseau étendu à sécurité mécanique quantique, avec des dispositifs de réseau réalisés à cet effet,
et comprenant au moins un noeud extérieur du QMS-WAN (1) équipé de moyens mécaniques quantiques qui réalise un noeud d'accès (2) au QMS-WAN (1) par lequel des terminaux côté abonné (3₁ ... 3ₙ, 3'₁ ... 3'ₙ) reliés à celui-ci et ne disposant pas eux-mêmes de moyens mécaniques quantiques obtiennent un accès à sécurité quantique au QMS-WAN (1)
dans lequel chaque terminal côté abonné (3₁ ... 3ₙ, 3'₁ ... 3'ₙ) se connectant audit au moins un noeud d'accès (2) au QMS-WAN (1) est équipé d'identifiants attribués par l'opérateur du noeud d'accès (2) et est réalisé pour s'authentifier auprès du noeud d'accès (2) vis-à-vis de celui-ci au moyen de ces identifiants pour la connexion au noeud d'accès (2),
**caractérisé**
- **en ce que** ledit au moins noeud d'accès au QMS-WAN sert aussi de passerelle VPN (2') et est réalisé pour constituer un VPN pour des terminaux côté abonné (3₁ ... 3ₙ, 3'₁ ... 3'ₙ) se connectant au noeud d'accès (2), et
- **en ce que** ledit au moins un noeud d'accès (2) servant de passerelle VPN (2') ainsi que chaque terminal côté abonné (3₁ ... 3ₙ, 3'₁ ... 3'ₙ) se connectant à celui-ci sont réalisés pour traiter une application de programme pour exécuter un procédé de cryptographie post-quantique à l'aide duquel ils chiffrent à sécurité quantique une liaison VPN établie entre eux en se servant des identifiants utilisés par un terminal côté abonné (3₁ ... 3ₙ, 3'₁ ... 3'ₙ) respectif pour la connexion au noeud d'accès (2) et d'un certificat PQC utilisé par le noeud d'accès (2) pour l'authentification vis-à-vis des terminaux côté abonné (3₁ ... 3ₙ, 3'₁ ... 3'ₙ) se connectant à celui-ci, de sorte que le VPN constitué par le noeud d'accès (2) servant de passerelle VPN (2') est un PQ-VPN, c'est-à-dire un VPN sécurisé par cryptographie post-quantique.

7. Système selon la revendication 6, **caractérisé en ce qu'**un terminal côté abonné (3₁ ... 3ₙ, 3'₁ ... 3'ₙ) respectif est réalisé pour l'utilisation d'une carte intelligente (5) ou d'un module d'identité d'abonné, SIM, réalisé sous la forme d'une carte SIM ou eSIM, qui reçoit les données de connexion pour le noeud d'accès (2) au QMS-WAN (1) ainsi que les identifiants utilisés pour l'authentification auprès du noeud d'accès (2) et pour la sécurisation de la liaison avec le noeud d'accès (2) au moyen du procédé PQC.

8. Système selon la revendication 6 ou 7, **caractérisé en ce que** chaque terminal côté abonné (3₁ ... 3ₙ, 3'₁ ... 3'ₙ) se connectant audit au moins un noeud d'accès (2) au QMS-WAN (1) et le noeud d'accès (2) servant aussi de passerelle VPN (2') sont équipés d'un secret commun, sauvegardé chez eux préalablement en tant que secret pré-partagé, et sont réalisés en utilisant ce secret pré-partagé commun par l'application d'une fonction de dérivation de clé, KDF, notamment de la même règle de traitement, pour générer des clés d'application à sécurité quantique identiques avec respectivement un identificateur associé, et pour les sauvegarder dans une mémoire sécurisée locale.

9. Système selon la revendication 8, dans lequel un terminal côté abonné respectif est équipé d'une carte intelligente (5) ou d'un module d'identité d'abonné, SIM, réalisé sous forme de carte SIM ou eSIM, qui réalise la mémoire sécurisée pour sauvegarder les clés d'application à sécurité quantique générées, et des identificateurs désignant respectivement de manière univoque l'une de ces clés d'application.

10. Système selon l'une quelconque des revendications 6 à 9, **caractérisé en ce que** ledit au moins un noeud d'accès (2) servant de passerelle VPN (2') comprend un générateur de nombres aléatoires quantiques, QRNG, (4) pour générer des nombres aléatoires à haute entropie.

11. Système selon l'une quelconque des revendications 6 à 10, **caractérisé en ce que** ledit au moins un noeud d'accès (2) servant de passerelle VPN (2') comprend un générateur de nombres aléatoires véritables physique pour générer des nombres aléatoires à haute entropie.

12. Système selon l'une quelconque des revendications 6 à 11, **caractérisé en ce que** ledit au moins un noeud d'accès (2) servant de passerelle VPN (2') comprend un ordinateur quantique pour générer des nombres aléatoires à haute entropie.

13. Système selon la revendication 12, **caractérisé en ce que** ledit au moins un noeud d'accès (2) servant de passerelle VPN (2') comprend un ordinateur conventionnel qui est équipé d'une application de programme validant lors de leur traitement les nombres aléatoires générés par l'ordinateur quantique quant à leur entropie.

14. Système selon l'une quelconque des revendications 6 à 13, **caractérisé en ce que** le noeud d'accès (2) servant de passerelle VPN (2') est relié aux terminaux côté abonné (3₁ ... 3ₙ, 3'₁ ... 3'ₙ) dans le PQ-VPN respectivement par deux chemins disjoints.

15. Système selon la revendication 14, **caractérisé en ce que** les terminaux côté abonné (3₁ ... 3ₙ, 3'₁ ... 3'ₙ) et le noeud d'accès (2) servant de passerelle VPN (2') sont réalisés pour se servir de deux techniques de transmission différentes, notamment pour se servir respectivement de l'une de ces techniques de transmission sur un chemin respectif des deux chemins de réseau disjoints.
